# EUROPEAN PATENT APPLICATION

(11) **EP 4 036 461 A1**
(43) Date of publication of application: **03.08.2022**
(21) Application number: 20867840.9
(22) Date of filing: 17.09.2020
(51) Int. Cl.: F21S 2/00, E06B 9/24, F21V 5/00, F21Y 115/10, F21Y 115/15, F21Y 115/30

(54) **OPTICAL MEMBER AND LIGHT GUIDE SYSTEM**

(30) Priority: 26.09.2019 JP 2019175836
(71) Applicant: Nitto Denko Corporation, Ibaraki-shi, Osaka 567-8680 (JP)
(72) Inventor: WATANABE, Kenta, Ibaraki-shi, Osaka 567-8680 (JP); OGASAWARA, Akiko, Ibaraki-shi, Osaka 567-8680 (JP); KISHI, Atsushi, Ibaraki-shi, Osaka 567-8680 (JP)
(74) Representative: Grünecker Patent- und Rechtsanwälte PartG mbB
(86) International application number: PCT/JP2020/035242
(87) International publication number: WO 2021/060137

(57) **Abstract**

An optical member includes a light source, a first substrate to be a light guide that guides emitted light from the light source, a variable layer in contact with a predetermined surface of the first substrate, and a second substrate facing the first substrate via the variable layer. When a refractive index of the first substrate is n1, a refractive index of the variable layer can be changed to n2 or n3 (where n2 > n3), and n1, n2, and n3 satisfy a relationship of |n1 - n2| < |n1 - n3|.

## Description

### TECHNICAL FIELD

The present invention relates to an optical member and a light guide system.

### BACKGROUND ART

Conventionally, luminaires such as brackets and footlights that are used by being fixed to a wall are known. Meanwhile, luminaires using an organic Electro-Luminescence (EL) panel using an organic EL light-emitting element as a light source are known. Because the organic EL panel is thin and light, the organic EL panel can be suitably used for luminaires of various shapes. Further, in luminaires using the organic EL panel, a warm atmosphere by soft light can be created since the organic EL panel is a surface light source and emits diffused light.

Further, the following technology is disclosed for the purpose of energy saving (for example, see Patent Document 1). A water storage layer is formed by water stored in a gap between two translucent panels facing each other at a predetermined interval, and micro-bubbles are generated by means for generating microbubbles that are supplied to the water storage layer and mixed into the water storage layer. Then, by moving the microbubbles along the surface of the panel, the light transmittance is changed to adjust the amount of heat absorbed from the solar radiation and improve the cooling efficiency of the air conditioner.

### RELATED-ART DOCUMENTS

### PATENT DOCUMENTS

Patent Document 1: Japanese Patent Application Laid-Open No. 2010-72486

### SUMMARY OF THE INVENTION

### PROBLEM TO BE SOLVED BY THE INVENTION

However, although luminaires such as organic EL panels can be mounted on ceilings, walls, or the like, visible light cannot be transmitted, so it is not possible to view an outside landscape when mounted on a window.

On the other hand, with the technology disclosed in Patent Document 1, although it is possible to see the outside landscape, it does not function as a light source.

The present invention has been made in view of the above points, and an object of the present invention is to provide an optical member that can be used both as a light source and as a transparent member capable of transmitting visible light.

### MEANS TO SOLVE THE PROBLEM

The present optical member includes a light source, a first substrate to be a light guide that guides emitted light from the light source, a variable layer in contact with a predetermined surface of the first substrate, and a second substrate facing the first substrate via the variable layer. When a refractive index of the first substrate is n1, a refractive index of the variable layer can be changed to n2 or n3 (where n2 > n3), and n1, n2, and n3 satisfy a relationship of |n1 - n2| < |n1 - n3|.

### EFFECTS OF THE INVENTION

According to the disclosed technology, an optical member that can be used both as a light source and as a transparent member capable of transmitting visible light can be provided.

### BRIEF DESCRIPTION OF THE DRAWINGS

FIG. 1 is a schematic diagram illustrating a light guide system according to a first embodiment;
FIG. 2 is an example of a hardware block diagram of a controller included in the light guide system according to the first embodiment;
FIG. 3 is an example of a functional block diagram of the controller included in the light guide system according to the first embodiment;
FIG. 4 is a cross-sectional view (No. 1) illustrating an optical member of the light guide system according to the first embodiment;
FIG. 5 is a cross-sectional view (No. 2) illustrating the optical member of the light guide system according to the first embodiment;
FIG. 6 is a cross-sectional view (No. 3) illustrating the optical member of the light guide system according to the first embodiment;
FIG. 7 is a schematic diagram illustrating a light guide system according to a second embodiment;
FIG. 8 is a cross-sectional view (No. 1) illustrating an optical member of the light guide system according to the second embodiment;
FIG. 9 is an example of a functional block diagram of a controller included in the light guide system according to the second embodiment;
FIG. 10 is a cross-sectional view (No. 2) illustrating the optical member of the light guide system according to the second embodiment;
FIG. 11 is a cross-sectional view (No. 3) illustrating the optical member of the light guide system according to the second embodiment;
FIG. 12 is a cross-sectional view (No. 4) illustrating the optical member of the light guide system according to the second embodiment; and
FIG. 13 is a cross-sectional view (No. 5) illustrating the optical member of the light guide system according to the second embodiment.

### MODE FOR CARRYING OUT THE INVENTION

An optical member of the present invention includes a light source, a first substrate to be a light guide that guides emitted light from the light source, a variable layer in contact with a predetermined surface of the first substrate, and a second substrate facing the first substrate via the variable layer. When a refractive index of the first substrate is n1, a refractive index of the variable layer can be changed to n2 or n3 (where n2 > n3), and n1, n2, and n3 satisfy a relationship of |n1 - n2| < n1 - n3|.

In the present invention, the variable layer in which the refractive index changes is provided between the first substrate to be a light guide and the second substrate facing the first substrate, and the first substrate is designed such that light guided from the light source to the first substrate is emitted from the variable layer side. As a result, when the light source is turned off, the refractive index of the variable layer is set to n2, that is, the refractive index of the variable layer is increased so that an optically transparent member can be obtained from the first substrate through the second substrate (referred to as a "transparent state").

On the other hand, when the light source is turned on, the refractive index of the variable layer is set to n3, that is, the refractive index of the variable layer is decreased so that the light from the light source can be sufficiently guided through the first substrate and can be emitted from the first substrate side to the second substrate side (referred to as "light-emitting state"). Further, when the light source is turned off, the refractive index of the variable layer is set to n3, that is, the refractive index of the variable layer is decreased so that a member with haze can be obtained from the first substrate to the second substrate, in other words, privacy can be protected (referred to as "haze state").

As described above, the optical member of the present invention can easily combine the on/off of the light source and the change of the refractive index of the variable layer. Accordingly, a plurality of optical modes can be implemented.

In order to improve the transparent state, the difference of the values of the refractive index n2 - n1 is preferably not less than 0 and not more than 0.2.

In order to improve the light-emitting state, the difference of the values of the refractive index n3 - n1is preferably not less than 0.46 and not more than 0.76.

Hereinafter, embodiments for implementing the invention will be described with reference to the drawings. In each drawing, the same components may be indicated by the same reference numerals and duplicated descriptions may be omitted. Further, in each drawing, the size and shape may be partially exaggerated to facilitate understanding of the contents of the present embodiment.

### <First embodiment>

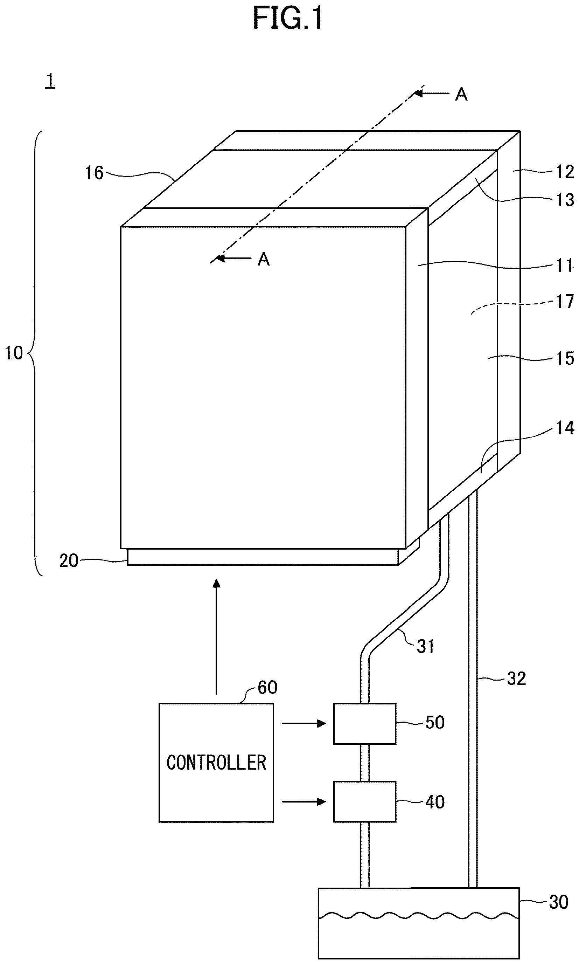

FIG. 1 is a schematic diagram illustrating a light guide system according to a first embodiment. As illustrated in FIG. 1, a light guide system 1 includes an optical member 10, a water storage 30, a pump 40, a solenoid valve 50, and a controller 60.

The optical member 10 includes substrates 11 and 12, supports 13 to 16, a variable layer 17, and a light source 20. In the light guide system 1, the optical member 10 is a portion that becomes a light source or a transparent member and can be attached to, for example, a window portion of a building such as a building or a house.

The optical member 10 includes two plate-shaped substrates 11 and 12 arranged substantially in parallel with a predetermined interval. The substrates 11 and 12 are transparent and can transmit visible light. The visible light transmittance of the substrates 11 and 12 is preferably 70% or more, more preferably 80% or more, and further preferably 90% or more. For example, inorganic glass such as soda lime glass, acrylic resin, and the like may be used as substrates 11 and 12.

The shapes of the substrates 11 and 12 are not particularly limited, but are, for example, rectangular. When the shapes of the substrates 11 and 12 are rectangular, the sizes of the substrates 11 and 12 when viewed from a direction parallel to the line A-A in FIG. 1 are not particularly limited, but are, for example, approximately 2030 mm by 1690 mm in length and width. The thicknesses of the substrates 11 and 12 are not particularly limited, but are, for example, approximately 2 mm to 20 mm. The distance (thickness of the variable layer 17) between the substrates 11 and 12 is not particularly limited, but is, for example, approximately 5 mm to 30 mm.

The substrates 11 and 12 are supported from the vertical direction by the supports 13 and 14, and are supported from left and right directions by the supports 15 and 16, and the variable layer 17 is formed in a sealed air gap inside. The substrate 12 faces the substrate 11 via the variable layer 17, and the variable layer 17 is formed in contact with the surfaces of the substrates 11 and 12 facing each other. The variable layer 17 can be changed into a liquid layer and a gas layer.

A structure supporting the substrates 11 and 12 is not particularly limited in the embodiment illustrated in FIG. 1, as long as the optical member 10 can form a sealed air gap in which the variable layer 17 is disposed between the substrates 11 and 12.

A single light source 20 is disposed on a predetermined side of the substrate 11 (in the example of FIG. 1, the lower end portion of the substrates 11) so that the light source can be guided to the substrate 11. The light source 20 is, for example, an array of Light Emitting Diodes (LEDs) in which multiple LEDs are arranged in one or two dimensions along the lower end portion of the substrate 11, but any light source, such as an organic EL or laser, can be selected instead of the LED. The arrangement of the light source 20 is not particularly limited to the embodiment illustrated in FIG. 1. For example, the light source 20 may be suitably disposed at an upper end portion, a side end portion, or the like of the substrate 11.

The water storage 30 is connected to the variable layer 17 of the optical member 10 by going through the support 14 by a water supply line 31 via the pump 40 and the solenoid valve 50. The water storage 30 is also connected to the variable layer 17 of the optical member 10 by going through the support 14 by a drainage line 32. Note that the positions where the water supply line 31 and the drainage line 32 are connected with the variable layer 17 of the optical member 10 are not particularly limited.

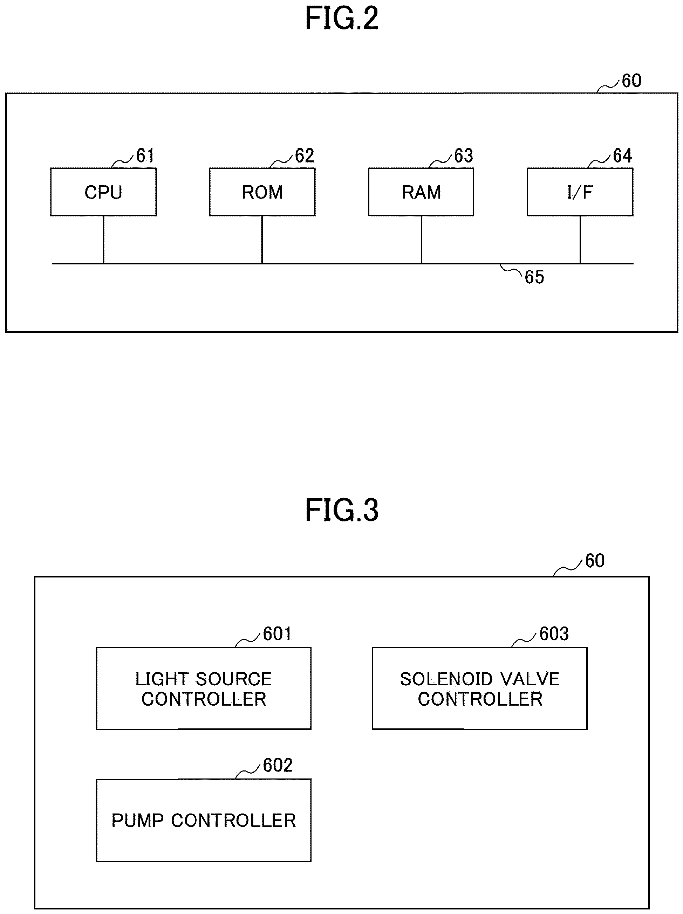

The controller 60 controls the light source 20, the pump 40, and the solenoid valve 50. The controller 60 will be described in detail with reference to FIG. 2 and FIG. 3.

FIG. 2 is an example of a hardware block diagram of a controller included in the light guide system according to the first embodiment. As illustrated in FIG. 2, the controller 60 includes, as main components, a CPU 61, a ROM 62, a RAM 63, an I/F 64, and a bus line 65. The CPU 61, the ROM 62, the RAM 63, and the I/F 64 are connected to each other via the bus line 65. The controller 60 may include other hardware blocks as necessary.

The CPU 61 controls each function of the controller 60. The ROM 62, which is a storage means, stores various information and a program executed by the CPU 61 for controlling each function of the controller 60. The RAM 63, which is a storage means, is used as a work area or the like of the CPU 61. The RAM 63 can temporarily store predetermined information. The I/F 64 is an interface for connecting to another device or the like, for example, an external network or the like.

The controller 60 may be a processor programmed to execute each function by software, such as a processor implemented by an electronic circuit, or may be an Application Specific Integrated Circuit (ASIC), a Digital Signal Processor (DSP), a Field Programmable Gate Array (FPGA), a System On a Chip (SOC), or a Graphics Processing Unit (GPU) designed to perform a predetermined function. The controller 60 may also be a circuit module or the like.

FIG. 3 is an example of a functional block diagram of the controller included in the light guide system according to the first embodiment. As illustrated in FIG. 3, the controller 60 includes a light source controller 601, a pump controller 602, and a solenoid valve controller 603 as main function blocks. The controller 60 may include other hardware blocks as necessary.

The light source controller 601 includes a function of switching on/off of the light source 20. The pump controller 602 includes a function of controlling the water supply amount and the drainage amount of the variable layer 17, for example, by changing the rotational speed of the motor of the pump 40. Further, the solenoid valve controller 603 includes a function of controlling the solenoid valve 50 to turn on/off the water supply to the variable layer 17. The controller 60 may include other functions as necessary.

Note that the water supply from the water storage 30 to the variable layer 17 is an example, and for example, the water supply of the variable layer 17 may be performed from a water source such as water supply.

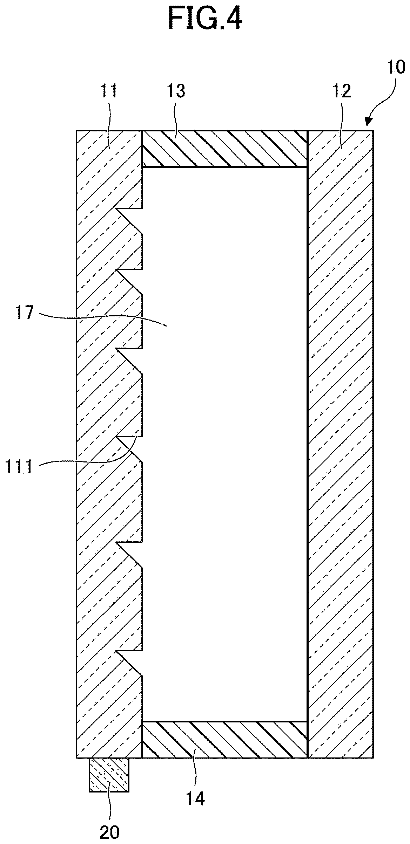

FIG. 4 is a cross-sectional view (No. 1) illustrating an optical member of the light guide system according to the first embodiment, and illustrates a longitudinal cross-section along the line A-A in FIG. 1. As illustrated in FIG. 4, multiple grooves 111 having a substantially triangular cross-sectional shape are formed on the surface of the substrate 11 exposed in the variable layer 17. Accordingly, the substrate 11 becomes a light guide that guides the emitted light from the light source 20.

The light guide is a member in which the surface of the substrate 11 is specially processed to uniformly surface-emit the light incident from the end surface of the substrate 11. Therefore, if the substrate 11 functions as a light guide, the structure is not limited to a structure in which multiple grooves having a substantially triangular cross-sectional shape are formed. For example, a dot pattern may be formed on the surface of the substrate 11 that is exposed in the variable layer 17.

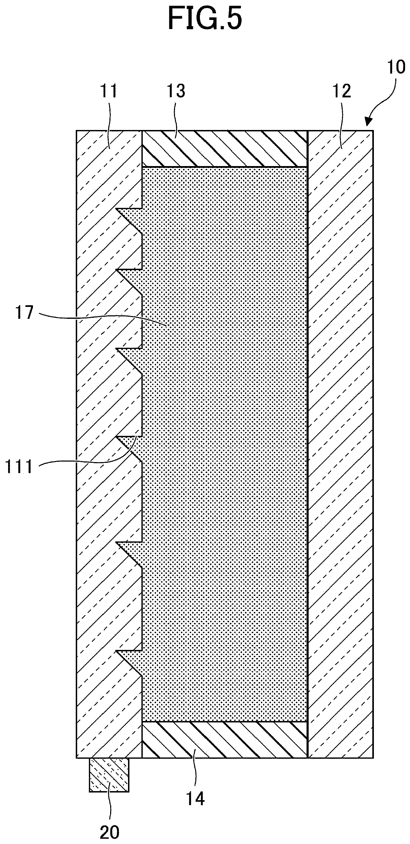

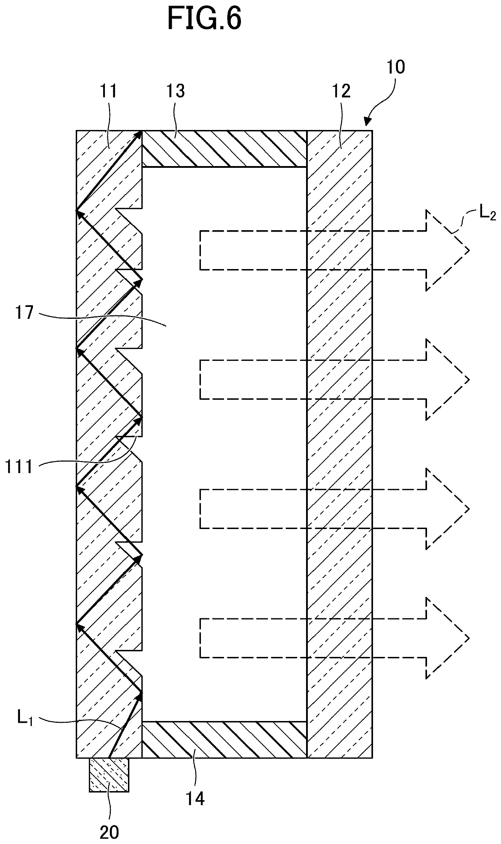

FIG. 5 is a cross-sectional view (No. 2) illustrating the optical member of the light guide system according to the first embodiment, and in a state where the inside of the variable layer 17 is filled with water and the light source 20 is turned off in FIG. 4. FIG. 6 is a cross-sectional view (No. 3) illustrating the optical member of the light guide system according to the first embodiment, and in a state where the inside of the variable layer 17 is filled with air and the light source 20 is turned on in the same manner as FIG. 4.

As illustrated in FIG. 5 and FIG. 6, the controller 60 controls the pump 40 and the solenoid valve 50 to supply and drain water to and from the variable layer 17, so that the inside of the variable layer 17 can be changed between a state filled with water and a state filled with air. That is, the controller 60 controls the pump 40 and the solenoid valve 50 to supply and drain water to and from the variable layer 17 so that the variable layer 17 can be changed to a liquid layer or a gas layer.

In the present embodiment, when the refractive index of the substrate 11 is n1, the refractive index of the variable layer 17 can be changed to n2 (liquid layer) or n3 (gas layer) (where n2 > n3), and each material is selected such that n1, n2, and n3 satisfy the relationship of |n1 - n2| < |n1 - n3|.

For example, when the substrate 11 is soda lime glass, the refractive index n1 = 1.51. Further, in the variable layer 17, when the liquid layer is water, the refractive index n2 = 1.33. Further, in the variable layer 17, when the gas layer is air, the refractive index n3 = 1.00. In this case, n1, n2, and n3 satisfy the relationship of |n1 - n2| < |n1 - n3|.

However, as long as n1, n2, and n3 satisfy the relationship of |n1 - n2| < |n1 - n3|, the configuration of the substrate 11 or the variable layer 17 is not limited. For example, borosilicate crown glass (refractive index n1 = 1.46), acrylic resin (refractive index n1 = 1.53), and optical resin (polymethylmethacrylate, refractive index n1 = 1.76) may be used as the material of the substrate 11 instead of the soda lime glass (refractive index n1 = 1.51). Alternatively, in the variable layer 17, an organic solvent or almond oil (refractive index n2 = 1.46) may be used instead of water as the liquid layer, or nitrogen or argon may be used instead of air as the gas layer. Note that the material of the substrate 12 is not particularly limited, and may be the same as or different from the substrate 11.

By setting the refractive index of the substrate 11 and the variable layer 17 (the liquid layer and the gas layer) in the above relationship, as illustrated in FIG. 5, when the variable layer 17 is a liquid layer, light incident from the outside of the optical member 10 is passed through the optical member 10. Therefore, the optical member 10 can function as a transparent member that transmits visible light similar to glass or the like.

That is, the pump 40 and the solenoid valve 50 are a variable layer changing portion which is controlled by the controller 60 to change the variable layer 17 to a state where the refractive index is n2 or a state where the refractive index is n3. Further, the variable layer 17 is also capable of changing the refractive index according to the turning on/off of the light source 20. Then, if the light source controller 601 of the controller 60 turns off the light source 20 and the pump controller 602 of the controller 60 and the solenoid valve controller 603 control the pump 40 and the solenoid valve 50 such that the variable layer 17 becomes the liquid layer (refractive index n2), the optical member 10 can function as a transparent member that transmits visible light. Note that the optical member 10 may transmit light other than visible light.

When the light source 20 is turned on and the variable layer 17 is a gas layer, the visibility of the optical member 10 is reduced. Therefore, when the optical member 10 is used as a transparent member, the light source 20 is preferably turned off and the variable layer 17 is preferably the liquid layer as illustrated in FIG. 5.

Further, by setting the refractive index of the substrate 11 and the variable layer 17 (the liquid layer and the gas layer) in the above relationship, as illustrated in FIG. 6, when the variable layer 17 is a gas layer, the optical member 10 can function as a surface light source in which the light guided through the substrate 11 is surface-emitted from a predetermined surface of the substrate 12 via the variable layer 17.

In FIG. 6, light L1 emitted from the light source 20 enters the substrate 11 and repeats total reflection in the substrate 11 which is a light guide. Then, a part of the light is reflected on the substrate 12 side and emitted from the substrate 12 to the outside. Since the grooves 111 are provided in the substrate 11 depending on the distance from the light source 20 such that the brightness of light L2 emitted from the substrate 12 is uniform on the entire surface of the light-emitting surface of the substrate 12, the optical member 10 can function as a surface light source.

That is, the variable layer 17 can change the refractive index according to the turning on/off of the light source 20. Then, if the light source controller 601 of the controller 60 turns on the light source 20 and the pump controller 602 and the solenoid valve controller 603 control the pump 40 and the solenoid valve 50 such that the variable layer 17 becomes the gas layer (refractive index n3), the optical member 10 can function as a surface light source.

As described above, the optical member 10 can be used as a light source or as a transparent member that transmits visible light. That is, the optical member 10 can also be used as a luminaire, and the outdoor scenery such as an outside landscape can be seen.

### <Second embodiment>

In a second embodiment, an optical member is illustrated with a plurality of variable layers. In the second embodiment, the description of the same component as that of the embodiment described previously may be omitted.

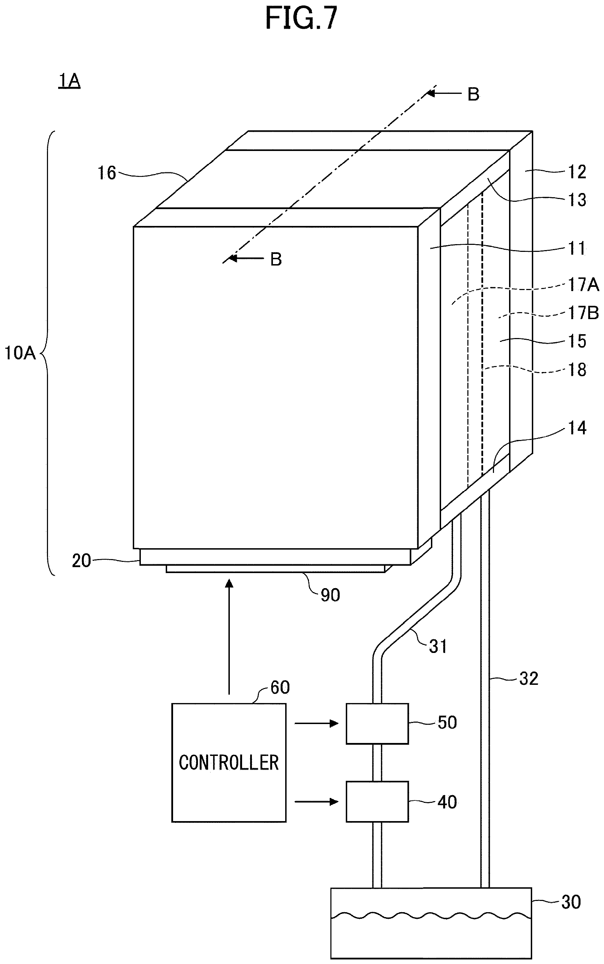

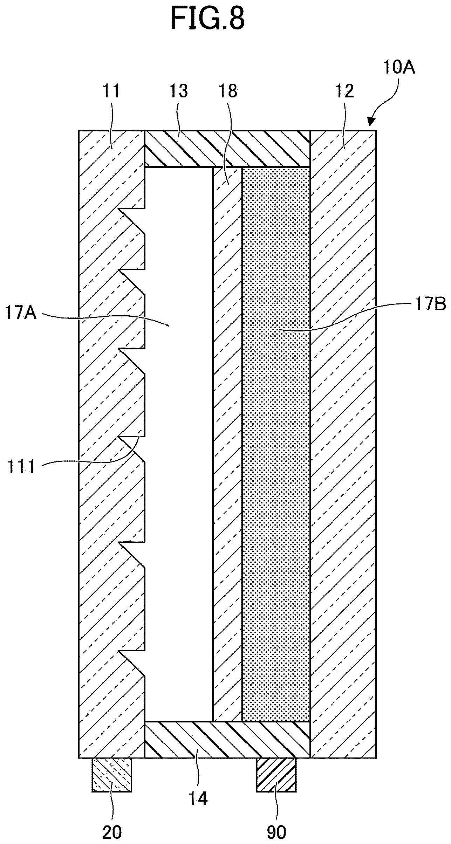

FIG. 7 is a schematic diagram illustrating a light guide system according to a second embodiment. FIG. 8 is a cross-sectional view (No. 1) illustrating an optical member of the light guide system according to the second embodiment, and illustrates a longitudinal cross-section along the line B-B in FIG. 7.

As illustrated in FIG. 7 and FIG. 8, a light guide system 1A differs from the light guide system 1 (refer to FIG. 1) in that the optical member 10 is replaced by an optical member 10A and a nozzle 90 is added.

In the optical member 10A, an air gap formed by substrates 11 and 12, and supports 13 and 14 is divided into a variable layer 17A and a variable layer 17B by a substrate 18. For example, inorganic glass such as soda lime glass, or organic glass such as acrylic resin may be used as the substrate 18.

The substrates 11 and 12, the supports 13 to 16, and the substrates 18 form the variable layers 17A and 17B in a sealed air gap inside. The substrate 18 faces the substrate 11 via the variable layer 17A, and the variable layer 17A is formed in contact with the surfaces of the substrates 11 and 18 facing each other.

The variable layer 17A can be changed into a liquid layer and a gas layer. The substrate 12 faces the substrate 18 via the variable layer 17B, and the variable layer 17B is formed in contact with the surfaces of the substrates 12 and 18 facing each other.

The variable layer 17B is a liquid layer capable of introducing a bubble B according to the turning on/off of the light source 20. The bubble B is, for example, a microbubble. Here, the microbubble refers to a bubble having a diameter of about 1 µm to 100 µm.

The water storage 30 is connected to the variable layer 17A of the optical member 10A by going through the support 14 by a water supply line 31 via the pump 40 and the solenoid valve 50. The water storage 30 is also connected to the variable layer 17A of the optical member 10A by going through the support 14 by a drainage line 32. Note that the positions where the water supply line 31 and the drainage line 32 are connected with the variable layer 17A of the optical member 10A are not particularly limited.

The nozzle 90 is a microbubble generator disposed along the end portion of the variable layer 17B. On the variable layer 17B side of the nozzle 90, for example, a number of micropores are formed at a predetermined pitch through the support 14 to introduce the bubble B into the variable layer 17B. Note that the variable layer 17B is always filled with a liquid such as water. The nozzle 90 may be any type of microbubble generators such as an ejector type, a cavitation type, a swirling flow type, a pressurized melting type, or the like.

Further, instead of using the nozzle 90 which is a microbubble generator, a method of supplying water containing microbubbles to the variable layer 17B may be used. For example, a reservoir similar to the water storage 30 may be disposed outside of the optical member 10A, and the reservoir may be filled with microbubbles generated in various ways as described above. Further, water containing microbubbles may be supplied from the reservoir to the variable layer 17B by pumps or the like as necessary.

Since the life of the microbubbles is a few minutes to tens of minutes, it is necessary to introduce microbubbles when necessary in the reservoir or to keep the reservoir always in a state where microbubbles are introduced.

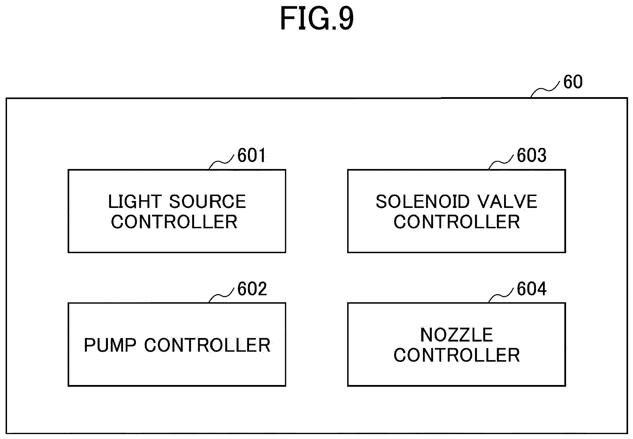

As illustrated in FIG. 9, the controller 60 includes the light source controller 601, the pump controller 602, the solenoid valve controller 603, and a nozzle controller 604 as main functional blocks. The controller 60 may include other hardware blocks as necessary.

The light source controller 601 includes a function of switching on/off of the light source 20. The pump controller 602 includes a function of controlling the water supply amount and the drainage amount of the variable layer 17A, for example, by changing the rotational speed of the motor of the pump 40. Further, the solenoid valve controller 603 includes a function of controlling the solenoid valve 50 to turn on/off the water supply to the variable layer 17A. Further, the nozzle controller 604 includes a function of controlling the nozzle 90 to turn on/off the supply of bubbles to the variable layer 17B and a function of adjusting the amount of bubbles supplied to the variable layer 17B. The controller 60 may include other functions as necessary.

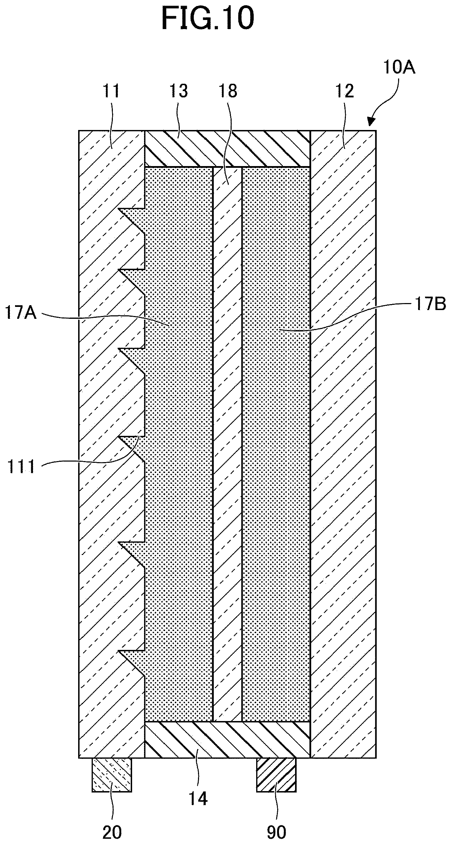

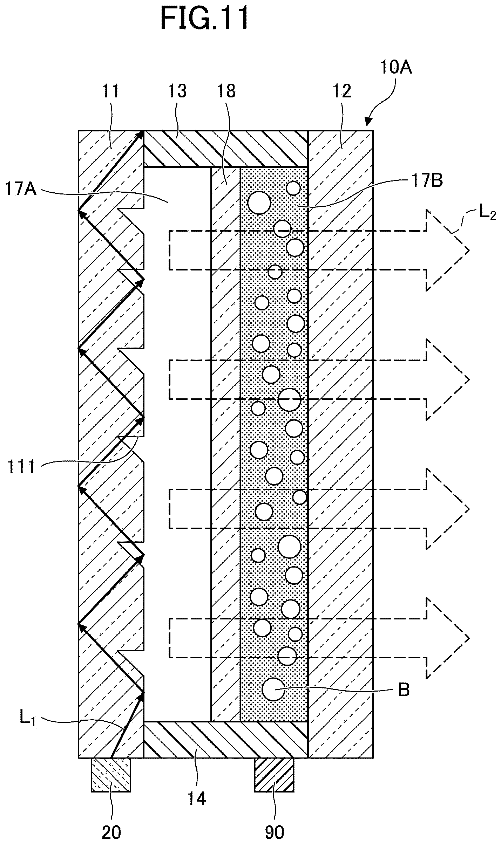

FIG. 10 is a cross-sectional view (No. 2) illustrating the optical member of the light guide system according to the second embodiment, and in a state where the inside of the variable layer 17A is filled with water and the light source 20 is turned off in FIG. 8. FIG. 11 is a cross-sectional view (No. 3) illustrating the optical member of the light guide system according to the second embodiment, and in a state where the inside of the variable layer 17A is filled with air, the bubbles B are introduced into the variable layer 17B, and the light source 20 is turned on in the same manner as FIG. 8.

As illustrated in FIG. 10 and FIG. 11, the controller 60 controls the pump 40 and the solenoid valve 50 to supply and drain water to and from the variable layer 17A so that the inside of the variable layer 17A can be changed between a state filled with water and a state filled with air. That is, the controller 60 controls the pump 40 and the solenoid valve 50 to supply and drain water to and from the variable layer 17A, so that the variable layer 17A can be changed to a liquid layer or a gas layer.

Further, the variable layer 17B is always filled with a liquid such as water, but the controller 60 can control the nozzle 90 to introduce the bubbles B into the variable layer 17B. That is, the controller 60 controls the nozzle 90 to introduce the bubbles B into the variable layer 17B so that the variable layer 17B can be changed from a liquid layer having no bubbles B to a liquid layer into which the bubbles B are introduced.

A number of bubbles B supplied from the nozzle 90 rise through the variable layer 17B in the entire region of the variable layer 17B. The bubbles B rising in the variable layer 17B are discharged into the atmosphere via a through hole (not illustrated) provided on the support 13. The variable layer 17B into which the bubbles B are introduced functions as a diffusion layer that diffuses incident light.

In the present embodiment, as in the first embodiment, when the refractive index of the substrate 11 is n1, the refractive index of the variable layer 17A can be changed to n2 (liquid layer) or n3 (gas layer) (where n2 > n3), and each material is selected such that n1, n2, and n3 satisfy the relationship of |n1 - n2| < |n1 - n3|.

For example, when the substrate 11 is soda lime glass, the refractive index n1 = 1.51. Further, in the variable layer 17A, when the liquid layer is water, the refractive index n2 = 1.33. Further, in the variable layer 17A, when the gas layer is air, the refractive index n3 = 1.00. In this case, n1, n2, and n3 satisfy the relationship of |n1 - n2| < |n1 - n3|.

However, as long as n1, n2, and n3 satisfy the relationship of |n1 - n2| < |n1 - n3|, the configuration of the substrate 11 or the variable layer 17A is not limited. For example, borosilicate crown glass (refractive index n1 = 1.46), acrylic resin (refractive index n1 = 1.53), and optical resin (polymethylmethacrylate, refractive index n1 = 1.76) may be used as the material of the substrate 11 instead of the soda lime glass (refractive index n1 = 1.51). Alternatively, in the variable layer 17A, an organic solvent or almond oil (refractive index n2 = 1.46) may be used instead of water as the liquid layer, or nitrogen or argon may be used instead of air as the gas layer. Note that the material of the substrates 12 and 18 is not particularly limited, and may be the same as or different from the substrate 11.

By setting the refractive index of the substrate 11 and the variable layer 17A (the liquid layer and the gas layer) in the above relationship, as illustrated in FIG. 10, when the variable layer 17A is a liquid layer, light incident from the outside of the optical member 10A passes through the optical member 10A. Therefore, the optical member 10A can function as a transparent member that transmits visible light similar to glass or the like.

That is, the variable layer 17A is also capable of changing the refractive index according to the turning on/off of the light source 20. Then, if the light source controller 601 of the controller 60 turns off the light source 20 and the pump controller 602 of the controller 60 and the solenoid valve controller 603 control the pump 40 and the solenoid valve 50 such that the variable layer 17A becomes the liquid layer (refractive index n2), the optical member 10A can function as a transparent member that transmits visible light. Note that the optical member 10A may transmit light other than visible light.

When the light source 20 is turned on and the variable layer 17A is a gas layer, the visibility of the optical member 10A is reduced. Therefore, when the optical member 10A is used as a transparent member, the light source 20 is preferably turned off and the variable layer 17A is preferably the liquid layer as illustrated in FIG. 5.

Further, by setting the refractive index of the substrate 11 and the variable layer 17A (the liquid layer and the gas layer) in the above relationship, as illustrated in FIG. 11, when the variable layer 17A is a gas layer, the optical member 10A can function as a surface light source in which the light guided through the substrate 11 is surface-emitted from a predetermined surface of the substrate 12 via the variable layer 17A, the substrate 18, and the variable layer 17B.

In FIG. 11, light L1 emitted from the light source 20 enters the substrate 11 and repeats total reflection in the substrate 11 which is a light guide. Then, a part of the light is reflected on the substrate 12 side and emitted from the substrate 12 to the outside. Since the grooves 111 are provided in the substrate 11 depending on the distance from the light source 20 such that the brightness of light L2 emitted from the substrate 12 is uniform on the entire surface of the light-emitting surface of the substrate 12, the optical member 10A can function as a surface light source.

That is, the variable layer 17A can change the refractive index according to the turning on/off of the light source 20. Then, if the light source controller 601 of the controller 60 turns on the light source 20 and the pump controller 602 and the solenoid valve controller 603 control the pump 40 and the solenoid valve 50 such that the variable layer 17A becomes the gas layer (refractive index n3), the optical member 10A can function as a surface light source.

In this case, if the nozzle controller 604 of the controller 60 controls the nozzle 90 such that the bubbles B are introduced into the variable layer 17B, the variable layer 17B in which the bubbles B are introduced into the entire region functions as a diffusion layer. Therefore, the brightness of the emitted light L2 from the emitting surface of the substrate 12 can be more uniform than that of the first embodiment.

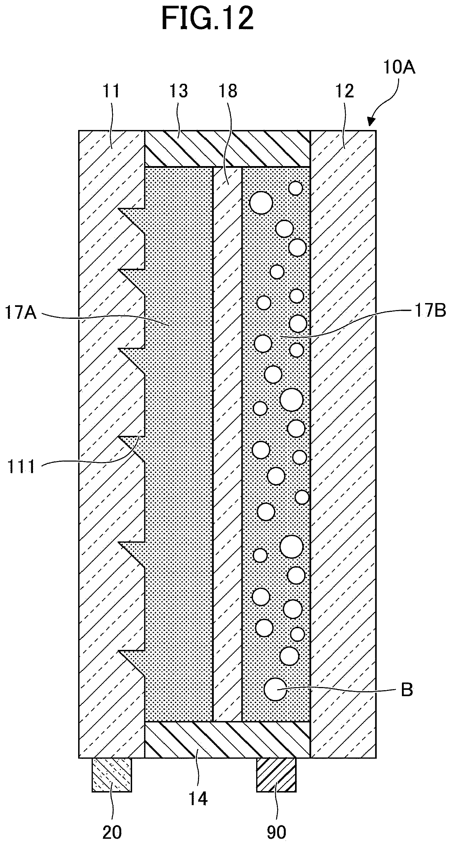

Further, the optical member 10A can also be used as privacy glass. FIG. 12 is a cross-sectional view (No. 4) illustrating the optical member of the light guide system according to the second embodiment, and in a state where the bubbles B are introduced into the variable layer 17B. Further, as in the case of FIG. 10, the light source 20 is turned off.

When the bubbles B are introduced into the variable layer 17B, the variable layer 17B becomes cloudy, and light incident from the outside of the optical member 10A does not readily pass through the optical member 10A. Therefore, the optical member 10A becomes a member having a lower visible light transmittance than the transparent member in the state of FIG. 10, and can function as privacy glass.

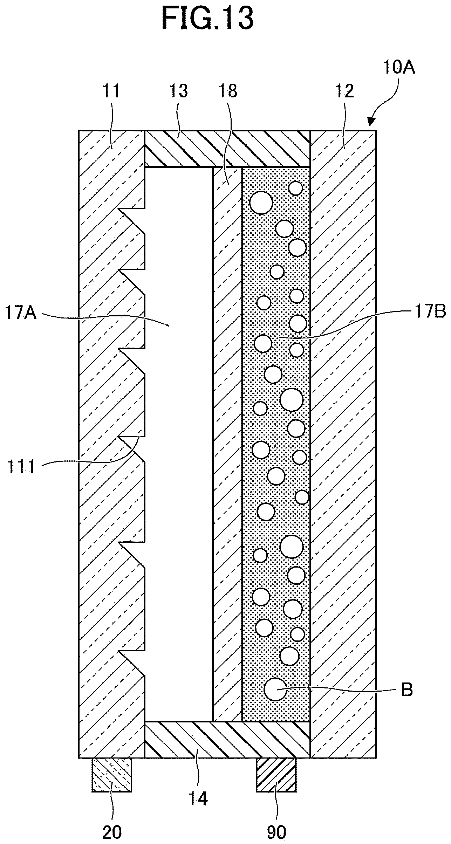

FIG. 13 is a cross-sectional view (No. 5) illustrating the optical member of the light guide system according to the second embodiment, and in a state where the variable layer 17A is a gas layer in FIG. 12. Further, as in the case of FIG. 12, the light source 20 is turned off.

When the variable layer 17A is a gas layer, the light incident from the outside of the optical member 10A passes through the optical member 10A further less readily than in the case of FIG. 12. Accordingly, the optical member 10A becomes a member having a lower visible light transmittance than the state illustrated in FIG. 12, thus its function as a privacy glass can be further enhanced.

Although the preferred embodiments have been described in detail above, they are not limited to the embodiments described above, and various modifications and substitutions can be made to the embodiments described above without departing from the scope of the claims.

This international application claims priority based on Japanese Patent Application No. 2019-175836 filed on September 26, 2019, and the entire contents of Japanese Patent Application No. 2019-175836 are incorporated herein by reference.

[Description of Symbols]
- 1, 1A: light guide system
- 10, 10A: optical member
- 11, 12, 18: substrate
- 13, 14, 15, 16: support
- 17, 17A, 17B: variable layer
- 20: light source
- 30: water storage
- 31: water supply line
- 32: drainage line
- 40: pump
- 50: solenoid valve
- 60: controller
- 90: nozzle
- 111: groove

## Claims

1. An optical member comprising:
a light source;
a first substrate to be a light guide that guides emitted light from the light source;
a variable layer in contact with a predetermined surface of the first substrate; and
a second substrate facing the first substrate via the variable layer,
wherein, when a refractive index of the first substrate is n1, a refractive index of the variable layer can be changed to n2 or n3 (where n2 > n3), and n1, n2, and n3 satisfy a relationship of |n1 - n2| < |n1 - n3|.

2. The optical member according to claim 1, wherein, when the light source is turned on and the refractive index of the variable layer is n3, the optical member serves as a surface light source in which light guided through the first substrate is emitted as surface light from the second substrate side via the variable layer.

3. The optical member according to claim 1, wherein, when the light source is turned off and the refractive index of the variable layer is n2, the optical member serves as a transparent member that transmits visible light.

4. The optical member according to claim 1, further comprising:
a second variable layer in contact with a predetermined surface of the second substrate; and
a third substrate facing the second substrate via the second variable layer,
wherein the second variable layer is a liquid layer into which bubbles can be introduced according to turning on or turning off of the light source.

5. The optical member according to claim 4, wherein, when the light source is turned on and the refractive index of the variable layer is n3, the optical member serves as a surface light source in which light guided through the first substrate is emitted as surface light from the third substrate side via the variable layer, the second substrate, and the second variable layer.

6. The optical member according to claim 5, wherein, when the light source is turned on and the refractive index of the variable layer is n3, the bubbles are introduced into the second variable layer.

7. The optical member according to claim 4, wherein, when the light source is turned off and the refractive index of the variable layer is n2, the optical member serves as a transparent member that transmits visible light.

8. The optical member according to claim 7, wherein, when the light source is turned off, the refractive index of the variable layer is n2, and the bubbles are introduced into the second variable layer, the optical member becomes a member having a lower visible light transmittance than the transparent member.

9. The optical member according to claim 8, wherein, when the light source is turned off, the refractive index of the variable layer is n3, and the bubbles are introduced into the second variable layer, the optical member becomes a member having a further lower visible light transmittance than the transparent member.

10. The optical member according to any one of claims 1 to 9, wherein the variable layer can be changed into a liquid layer and a gas layer,
when the variable layer is the liquid layer, the refractive index of the variable layer is n2, and
when the variable layer is the gas layer, the refractive index of the variable layer is n3.

11. A light guide system comprising:
the optical member according to any one of claims 1 to 10;
a variable layer changing portion configured to change the variable layer to a state where a refractive index is n2 or a state where the refractive index is n3; and
a controller configured to control the variable layer and a light source such that the light source is turned on and the refractive index of the variable layer is n3, or the light source is turned off and the refractive index of the variable layer is n2.
